(19) Europäisches Patentamt
European Patent Office
Office européen des brevets

(11) EP 4 079 781 A1

(12) EUROPEAN PATENT APPLICATION
published in accordance with Art. 153(4) EPC

(43) Date of publication:
**26.10.2022 Bulletin 2022/43**

(21) Application number: **20901837.3**

(22) Date of filing: **16.12.2020**

(51) International Patent Classification (IPC):
***C08G 61/08*** *(2006.01)* ***C08L 21/00*** *(2006.01)*
***C08L 65/00*** *(2006.01)*

(52) Cooperative Patent Classification (CPC):
**C08G 61/08; C08L 21/00; C08L 65/00**

(86) International application number:
**PCT/JP2020/046943**

(87) International publication number:
**WO 2021/125222 (24.06.2021 Gazette 2021/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.12.2019 JP 2019227339**

(71) Applicant: **Zeon Corporation**
**Tokyo 100-8246 (JP)**

(72) Inventor: **SAKURAI, Takuro**
**Tokyo 100-8246 (JP)**

(74) Representative: **Hansen, Norbert**
**Maiwald Patentanwalts- und Rechtsanwaltsgesellschaft mbH**
**Elisenhof**
**Elisenstraße 3**
**80335 München (DE)**

# (54) RING-OPENED COPOLYMER

(57) Provided is a ring-opened copolymer containing a structural unit derived from a norbornene compound represented by general formula (I) below, a structural unit derived from a monocyclic olefin, and a branched structural unit, wherein the content of the branched structural unit is 0.005 to 0.08 mol% in the total repeating structural units of the ring-opened copolymer:

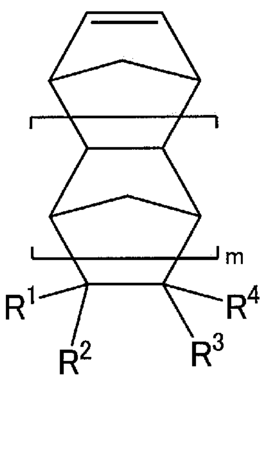

(I)

wherein $R^1$ to $R^4$ each independently represent a hydrogen atom, a $C_{1-20}$ linear saturated hydrocarbon group, or a substituent containing a halogen atom, a silicon atom, an oxygen atom or a nitrogen atom, and m is 0 or 1.

EP 4 079 781 A1

## Description

TECHNICAL FIELD

The present invention pertains to a ring-opened copolymer, and more particularly to a ring-opened copolymer which has excellent hot flowability (difficulty of mutual adhesion of crumbs) and which can give a cross-linked rubber having excellent wear resistance, and to a method for producing the ring-opened copolymer. The present invention also pertains to a rubber composition obtained using such a ring-opened copolymer, a cross-linked rubber obtained using the rubber composition, and a molded product obtained using the rubber composition or the cross-linked rubber.

BACKGROUND ART

It has been known that in general, ring-opening metathesis polymerization of cyclopentene and a norbornene compound in the presence of a so-called Ziegler-Natta catalyst consisting of a transition metal compound of Group 6 in the periodic table, such as $WCl_6$ or $MoCl_5$, and an organometallic activator, such as triisobutyl aluminum, diethyl aluminum chloride, or tetrabutyl tin, provides an unsaturated linear ring-opened polymer.

For example, Patent Document 1 discloses a ring-opened copolymer prepared from cyclopentene and a norbornene compound, the ring-opened copolymer having a structural unit derived from cyclopentene in an amount of 40 to 90 wt% and a structural unit derived from the norbornene compound in an amount of 10 to 60 wt% of the total repeating structural units of the copolymer, and having a weight average molecular weight (Mw) of 200,000 to 1,000,000. According to Patent Document 1, ring-opening copolymerization of cyclopentene with the norbornene compound can provide a rubber which has improved wet grip properties and low exothermic properties when cross-linked.

Patent Document 2, for example, discloses a method for producing a cyclopentene ring-opened polymer by ring-opening polymerization of cyclopentene in the presence of a metathesis polymerization catalyst, wherein a cyclic olefin having a vinyl group and/or a compound having three or more vinyl groups in an amount of 0.001 to 1 mol% with respect to the cyclopentene are/is reacted with the cyclopentene. The technique according to Patent Document 2 enables an easy production of a cyclopentene ring-opened copolymer having excellent hot flowability derived from its branched structure.

However, in Patent Documents 1 and 2, the wear resistance of the cross-linked rubbers obtained has not been examined.

RELATED ART DOCUMENTS

PATENT DOCUMENTS

Patent Document 1: International Publication No. WO 2014/133028
Patent Document 2: Japanese Unexamined Patent Application Publication No. JP 2011-126966

SUMMARY OF THE INVENTION

PROBLEM TO BE SOLVED BY THE INVENTION

In view of the above issues, the present invention is aimed at providing a ring-opened copolymer which has excellent hot flowability (difficulty of mutual adhesion of crumbs) and which can give a cross-linked rubber having excellent wear resistance, and a method for producing the ring-opened copolymer. The present invention is also aimed at providing a rubber composition obtained using such a ring-opened polymer, a cross-linked rubber obtained using the rubber composition, and a molded product obtained using the rubber composition or the cross-linked rubber.

MEANS FOR SOLVING THE PROBLEM

As a result of intensive studies to achieve the above purpose, the present inventor has found that a ring-opened copolymer containing a structural unit derived from a norbornene compound having a specific structure, a structural unit derived from a specific monocyclic olefin, and a specific amount of a branched structural has excellent hot flowability, thereby being effectively prevented from mutual adherence of crumbs thereof, and can give a cross-linked rubber having excellent wear resistance. These findings have led to the completion of the present invention.

Specifically, the present invention provides a ring-opened copolymer containing a structural unit derived from

a norbornene compound represented by general formula (I) below, a structural unit derived from a monocyclic olefin, and a branched structural unit, wherein the content of the branched structural unit is 0.005 to 0.08 mol% in the total repeating structural units of the ring-opened copolymer.

[Chem 1]

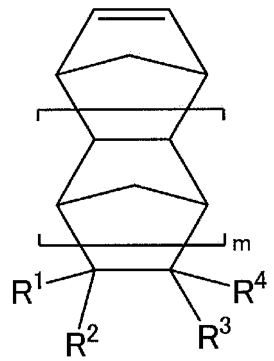

(I)

(In general formula (I), $R^1$ to $R^4$ each independently represent a hydrogen atom, a $C_{1-20}$ linear saturated hydrocarbon group, or a substituent containing a halogen atom, a silicon atom, an oxygen atom or a nitrogen atom, and m is 0 or 1.)

In the ring-opened copolymer according to the present invention, the content of the structural unit derived from a norbornene compound is preferably 5 mol% or more of the total repeating structural units.

In general formula (I) for the ring-opened copolymer according to the present invention, m is preferably 0.

In general formula (I) for the ring-opened copolymer according to the present invention, $R^1$ to $R^4$ are each independently preferably a hydrogen atom or a $C_{1-3}$ alkyl group.

In the ring-opened copolymer according to the present invention, the monocyclic olefin is preferably at least one selected from the group consisting of cyclopentene, cyclohexene, cycloheptene, and cyclooctene.

In the ring-opened copolymer according to the present invention, the branched structural unit is preferably represented by any of formulae (II) to (V) .

[Chem 2]

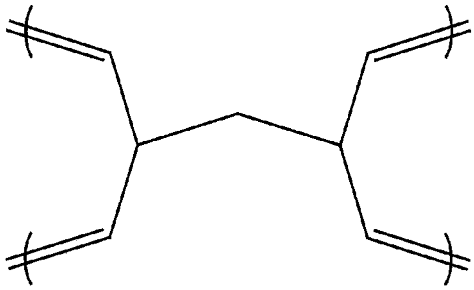

(II)

(In formula (II), a hydrogen atom may be substituted with a $C_{1-6}$ alkyl group.)

[Chem 3]

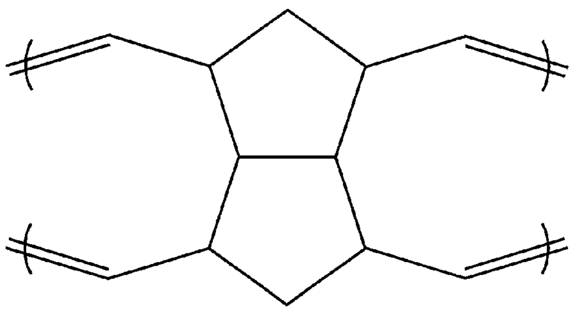

(III)

(In formula (III), a hydrogen atom may be substituted with a $C_{1-6}$ alkyl group.)

[Chem 4]

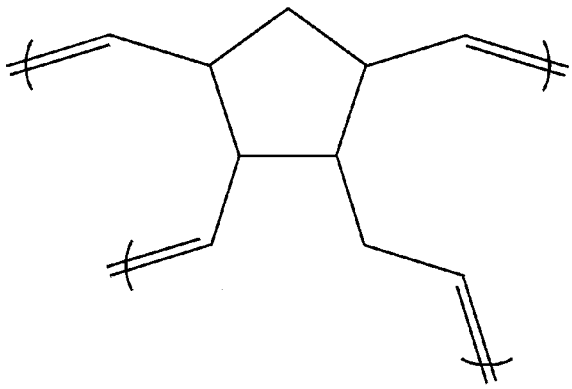

(IV)

(In formula (IV), a hydrogen atom may be substituted with a $C_{1-6}$ alkyl group.)

[Chem 5]

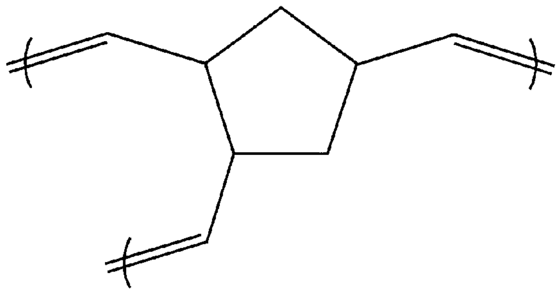

(V)

(In formula (V), a hydrogen atom may be substituted with a $C_{1-6}$ alkyl group.)

The ring-opened copolymer according to the present invention preferably has a weight average molecular weight of 150,000 or more and 400,000 or less.

The present invention further provides a rubber composition containing the ring-opened copolymer.

The rubber composition according to the present invention preferably further contains a cross-linker.

The present invention further provides a cross-linked rubber obtained by cross-linking the rubber composition.

The present invention further provides a molded product obtained by molding the rubber composition or the cross-linked rubber.

The present invention further provides a method for producing a ring-opened copolymer by ring-opening metathesis polymerization of a monomer mixture containing a norbornene compound represented by general formula (I), a monocyclic olefin, and a monomer capable of forming a branched structure, wherein the monomer capable of forming a branched structure is at least one selected from the group consisting of polycyclic diolefin compounds having at least two ring structures having one double bond, cyclic olefin compounds having a ring structure having one double bond and a vinyl group, and compounds having three or more vinyl groups.

[Chem 6]

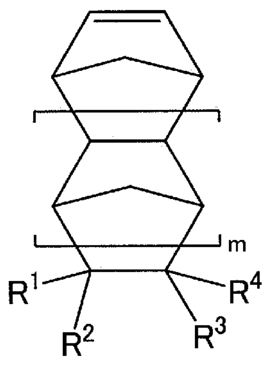

(I)

(In general formula (I), $R^1$ to $R^4$ each independently represent a hydrogen atom, a $C_{1-20}$ linear saturated hydrocarbon group, or a substituent containing a halogen atom, a silicon atom, an oxygen atom or a nitrogen atom, and m is 0 or 1.)

In the method for producing the ring-opened copolymer according to the present invention, the content of the monomer capable of forming a branched structure in the monomer mixture is preferably 0.01 to 0.045 mol% of the total amount of the monomer mixture.

EFFECTS OF INVENTION

The present invention can provide a ring-opened copolymer which has excellent hot flowability, thereby being effectively prevented from mutual adherence of crumbs thereof, and which can give a cross-linked rubber having excellent wear resistance, and a method for producing the ring-opened copolymer. The present invention can also provide a rubber composition obtained using such a ring-opened polymer, a cross-linked rubber obtained using the rubber composition, and a molded product obtained using the rubber composition or the cross-linked rubber.

DESCRIPTION OF EMBODIMENTS

<Ring-opened copolymer>

A ring-opened copolymer according to the present invention is a ring-opened copolymer containing a structural unit derived from a norbornene compound represented by general formula (1) below, a structural unit derived from a monocyclic olefin, and a branched structural unit, wherein the content of the branched structural unit is 0.005 to 0.08 mol% of the total repeating structural units of the ring-opened copolymer.

[Chem 7]

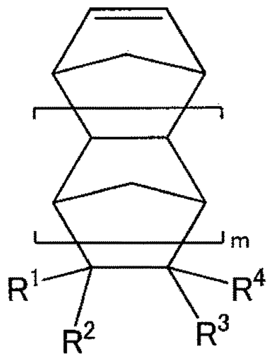

(1)

(In general formula (1), $R^1$ to $R^4$ each independently represent a hydrogen atom, a $C_{1-20}$ linear saturated hydrocarbon group, or a substituent containing a halogen atom, a silicon atom, an oxygen atom or a nitrogen atom, and m is 0 or 1.)

Specific examples of the norbornene compound represented by general formula (1) for forming the structural unit derived from the norbornene compound in the present invention include the following compounds, for example:

bicyclo[2.2.1]hept-2-enes unsubstituted or having a linear saturated hydrocarbon substituent, such as 2-norbornene, 5-methyl-2-norbornene, 5-ethyl-2-norbornene, 5-butyl-2-norbornene, 5-hexyl-2-norbornene, and 5-decyl-2-norbornene;

bicyclo[2.2.1]hept-2-enes having an alkoxycarbonyl group, such as methyl 5-norbornene-2-carboxylate, ethyl 5-norbornene-2-carboxylate, methyl 2-methyl-5-norbornene-2-carboxylate, and ethyl 2-methyl-5-norbornene-2-carboxylate;

bicyclo[2.2.1]hept-2-enes having a hydroxycarbonyl group, such as 5-norbornene-2-carboxylic acid and 5-norbornene-2,3-dicarboxylic acid;

bicyclo[2.2.1]hept-2-enes having a hydroxyl group, such as 5-hydroxy-2-norbornene, 5-hydroxymethyl-2-norbornene, 5,6-di(hydroxymethyl)-2-norbornene, 5,5-di(hydroxymethyl)-2-norbornene, 5-(2-hydroxyethoxycarbonyl)-2-norbornene, and 5-methyl-5-(2-hydroxyethoxycarbonyl)-2-norbornene;

bicyclo[2.2.1]hept-2-enes having a hydrocarbonyl group, such as 5-norbornene-2-carbaldehyde;

bicyclo[2.2.1]hept-2-enes having an alkoxycarbonyl group and a hydroxycarbonyl group, such as 3-methoxycarbonyl-5-norbornene-2-carboxylic acid;

bicyclo[2.2.1]hept-2-enes having a carbonyloxy group, such as 5-norbornene-2-yl acetate and 2-methyl-5-norbornene-2-yl acetate;

bicyclo[2.2.1]hept-2-enes having a functional group containing a nitrogen atom, such as 5-norbornene-2-carbonitrile and 5-norbornene-2-carboxamide;
bicyclo[2.2.1]hept-2-enes having a halogen atom, such as 5-chloro-2-norbornene; and
bicyclo[2.2.1]hept-2-enes having a functional group containing a silicon atom, such as 5-trimethoxysilyl-2-norbornene and 5-triethoxysilyl-2-norbornene.

One of these norbornene compounds represented by general formula (1) may be used alone, or two or more of them may be used in combination. The norbornene compound represented by general formula (1) is preferably a compound represented by general formula (1) in which m is 0. In general formula (1), $R^1$ to $R^4$ each are preferably a group which does not have an olefinic carbon-carbon double bond, and which does not bond to each other to form a ring, and $R^1$ to $R^4$ may be identical or different. $R^1$ to $R^4$ each are more preferably a hydrogen atom or a $C_{1-3}$ alkyl group. The norbornene compound represented by general formula (1) is more preferably 2-norbornene, 5-methyl-2-norbornene, and 5-ethyl-2-norbornene, more preferably 2-norbornene from the viewpoint of reliably providing the advantageous effects of the present invention.

In the ring-opened copolymer according to the present invention, the content of the structural unit derived from the norbornene compound is preferably 5 to 95 mol%, more preferably 10 to 90 mol%, further more preferably 15 to 85 mol%, more preferably 20 to 80 mol%, particularly preferably 20 to 50 mol% of the total repeating structural units, although not particularly limited thereto. Controlling the content of the structural unit derived from the norbornene compound within the aforementioned ranges can lead to production of a cross-linked rubber having further improved wear resistance.

The monocyclic olefin for forming the structural unit derived from the monocyclic olefin in the present invention may be any olefin which does not have a substituent having a carbon-carbon unsaturated bond and has only one cyclic structure. Examples thereof can include cyclic monoolefins such as cyclopropene, cyclobutene, cyclopentene, methylcyclopentene, cyclohexene, methylcyclohexene, cycloheptene, and cyclooctene; cyclic diolefins such as cyclohexadiene, methylcyclohexadiene, cyclooctadiene, and methylcyclooctadiene; and the like.

One of these monocyclic olefins may be used alone, or two or more of them may be used in combination. The monocyclic olefin is preferably cyclopentene, cyclohexene, cycloheptene, or cyclooctene. The monocyclic olefin is more preferably cyclopentene or cyclooctene, particularly preferably cyclopentene from the viewpoint of reliably providing the advantageous effects of the present invention.

In the ring-opened copolymer according to the present invention, the content of the structural unit derived from the monocyclic olefin is preferably 4.92 to 94.995 mol%, more preferably 9.925 to 89.99 mol%, further more preferably 14.93 to 84.98 mol%, particularly preferably 19.935 to 79.97 mol% of the total repeating structural units, although not particularly limited thereto. Controlling the content of the structural unit derived from the monocyclic olefin within the aforementioned ranges can lead to production of a cross-linked rubber having further improved wear resistance.

The monomer capable of forming a branched structure for forming the branched structural unit in the present invention is preferably at least one selected from the group consisting of polycyclic diolefin compounds having at least two ring structures having one double bond, cyclic olefin compounds having a ring structure having one double bond and a vinyl group, and compounds having three or more vinyl groups.

Incorporating a structural unit derived from a polycyclic diolefin compound having at least two ring structures having one double bond (hereinafter referred to as "polycyclic diolefin compound" as necessary) as the branched structural unit results in an incorporation of a tetra-branched structure beginning at the structural unit into the polymer chain. Incorporating a structural unit derived from a cyclic olefin compound having a ring structure having one double bond and a vinyl group (hereinafter referred to as "vinyl group containing cyclic olefin compound" as necessary) as the branched structural unit results in an incorporation of a tri-branched structure beginning at the structural unit into the polymer chain. Incorporating a structural unit derived from a compound having three or more vinyl groups as the branched structural unit results in an incorporation of a tri- or higher-branched structure beginning at the structural unit into the polymer chain.

Although the polycyclic diolefin compound for forming the structural unit derived from a polycyclic diolefin compound is not particularly limited, examples thereof include compounds represented by general formula (2) below, compounds represented by formulae (3) to (6) below, and the like.

[Chem 8]

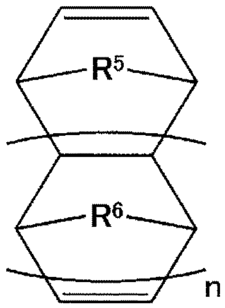

(2)

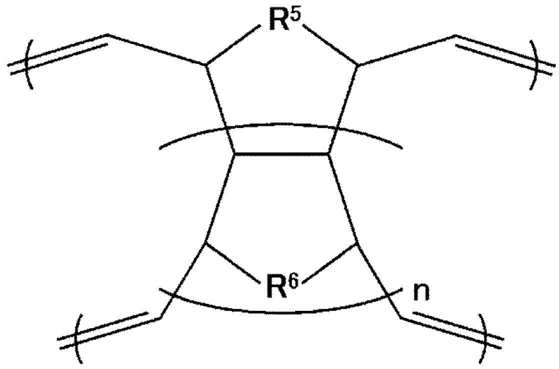

(2a)

In general formula (2), $R^5$ and $R^6$ each are a $C_{1-6}$ alkylene group, n is an integer from 0 to 2, and in general formula (2), a hydrogen atom may be substituted with a $C_{1-6}$ alkyl group. The compounds represented by general formula (2) will provide a branched structural unit represented by general formula (2a) through ring-opening copolymerization with the norbornene compound and the monocyclic olefin. In general formula (2a), $R^5$, $R^6$, and n each are the same as in general formula (2), and in general formula (2a), a hydrogen atom may be substituted with a $C_{1-6}$ alkyl group.

[Chem 9]

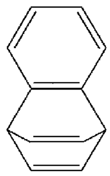
(3)

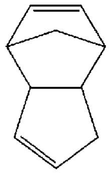
(4)

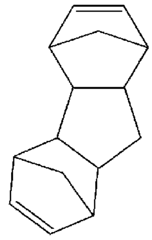
(5)

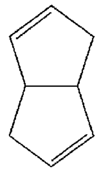
(6)

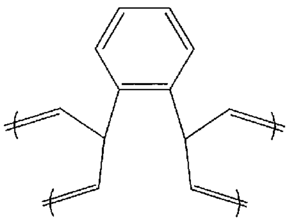
(3a)

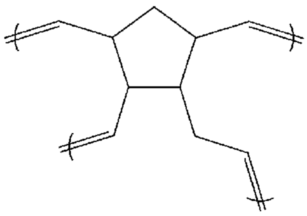
(4a)

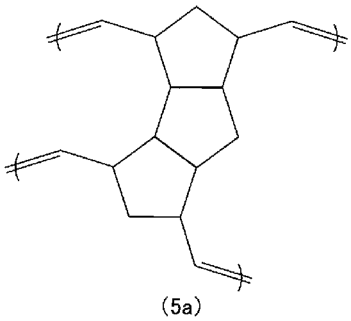
(5a)

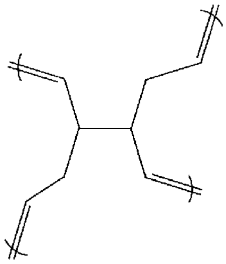
(6a)

In formulae (3) to (6), a hydrogen atom may be substituted with a $C_{1-6}$ alkyl group. The compounds represented by formulae (3) to (6) will provide branched structural units represented by formulae (3a) to (6a) respectively through ring-opening copolymerization with the norbornene compound and the monocyclic olefin. In formulae (3a) to (6a), a hydrogen atom may be substituted with a $C_{1-6}$ alkyl group.

Specific examples of the compounds represented by general formula (2) include compounds represented by formulae (7) to (10), and the like.

[Chem 10]

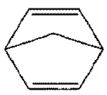
(7)

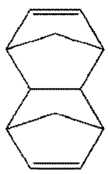
(8)

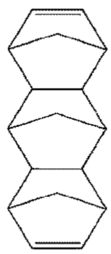
(9)

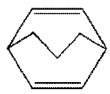
(10)

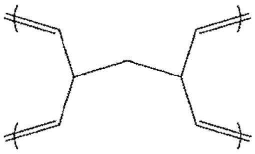
(7a)

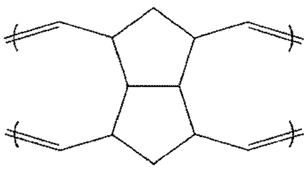
(8a)

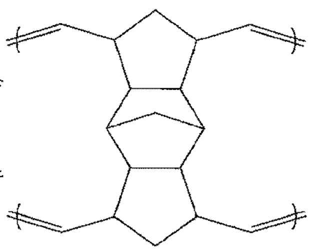
(9a)

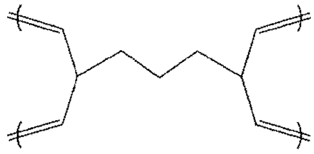
(10a)

In formulae (7) to (10), a hydrogen atom may be substituted with a $C_{1-6}$ alkyl group. The compounds represented by formulae (7) to (10) will provide branched structural units represented by formulae (7a) to (10a) respectively through ring-opening copolymerization with the norbornene compound and the monocyclic olefin. In formulae (7a) to (10a), a hydrogen atom may be substituted with a $C_{1-6}$ alkyl group.

Among the above-described compounds, in order to more appropriately form the branched structure, a compound represented by formula (4), formula (7), or formula (8) is preferably used. Namely, the ring-opened copolymer according to the present invention preferably has a branched structural unit represented by formula (4a), formula (7a), or formula (8a) as the branched structural unit.

Although the vinyl group containing cyclic olefin compound for forming the structural unit derived from a vinyl group containing cyclic olefin compound is not particularly limited, examples thereof include monocyclic olefins having a vinyl group such as 4-vinylcyclopentene and 5-vinylcyclooctene; norbornenes having a vinyl group such as 5-vinyl-2-norbornene, 5-propenyl-2-norbornene, and 5-styryl-2-norbornene; and the like. In these compounds, a hydrogen atom may be substituted with a $C_{1-6}$ alkyl group. Among these, in order to more appropriately form the branched structure, 5-vinyl-2-norbornene represented by formula (11) (including ones in which a hydrogen atom is substituted with a $C_{1-6}$ alkyl group) is suitable.

[Chem 17]

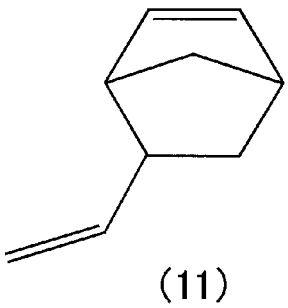

(11)

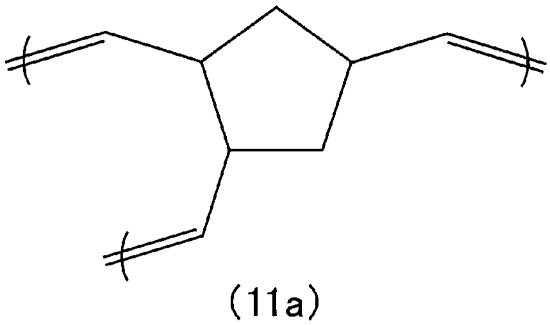

(11a)

In formula (11), a hydrogen atom may be substituted with a $C_{1-6}$ alkyl group. The compound represented by formula (11) will provide a branched structural unit represented by general formula (11a) through ring-opening copolymerization with the norbornene compound and the monocyclic olefin. In formula (11a), a hydrogen atom may be substituted with a $C_{1-6}$ alkyl group.

Examples of compounds having three or more vinyl groups for forming the structural unit derived from a compound having three or more vinyl groups include compounds having three vinyl groups such as 1,2,4-trivinylcyclohexane and 1,3,5-trivinylcyclohexane, and compounds having four or more vinyl groups such as divinylbenzene oligomer and 1,2-polybutadiene oligomer; and the like.

In the ring-opened copolymer according to the present invention, the content of the branched structural unit is 0.005 mol% or more, preferably 0.01 mol% or more, more preferably 0.02 mol% or more, further more preferably 0.03 mol% or more, still further more preferably 0.034 mol% or more of the total repeating units, and the upper limit thereof is 0.08 mol% or less, preferably 0.075 mol% or less, more preferably 0.07 mol% or less, further more preferably 0.065 mol% or less. When the content of the branched structural unit is excessively high, the ring-opened copolymer obtained significantly gels, leading to difficulties in combining the copolymer with compounding agents to prepare a rubber composition. When the content of the branched structural unit is excessively low, the resulting ring-opened copolymer results in a cross-linked rubber having poor wear resistance.

In addition to the norbornene compound represented by general formula (1), the monocyclic olefin, and the monomer capable of forming the branched structure, the ring-opened copolymer according to the present invention may be a copolymer formed by copolymerization of a different monomer which is copolymerizable with the former monomers. Examples of such different monomers include polycyclic cycloolefins having an aromatic ring, and the like. Examples

of polycyclic cycloolefins having an aromatic ring include phenylcyclooctene, 5-phenyl-1,5-cyclooctadiene, phenylcyclopentene, and the like. In the ring-opened copolymer according to the present invention, the content of structural units derived from the different monomer is preferably 10 mol% or less, more preferably 5 mol% or less of the total repeating structural units. In the present invention, particularly preferably, the structural units derived from the different monomer are substantially not contained.

The weight average molecular weight (Mw) of the ring-opened copolymer according to the present invention, which is measured by gel permeation chromatography and is calibrated with polystyrene standards, is preferably 100,000 to 1,000,000, more preferably 120,000 to 800,000, further more preferably 120,000 to 600,000, particularly preferably 150,000 to 400,000, although not particularly limited thereto. The ring-opened copolymer according to the present invention having such a molecular weight can provide a cross-linked rubber having further enhanced wear resistance. The ratio (Mw/Mn) between the weight average molecular weight (Mw) and the number average molecular weight (Mn) of the ring-opened copolymer according to the present invention, which are measured by gel permeation chromatography and are calibrated with polystyrene standards, is preferably 1.0 to 5.0, more preferably 1.5 to 3.0, although not particularly limited thereto.

The ring-opened copolymer according to the present invention may have a modifying group at the end(s) of the polymer chain. Having such a terminal modifying group can enhance the compatibility with silica, and thus a rubber composition containing the copolymer and silica can have an enhanced distribution of silica in some cases. As a result, a cross-linked rubber having further enhanced wear resistance can be obtained in some cases. The modifying group introduced to the end of the polymer chain is preferably a modifying group containing an atom selected from the group consisting of the atoms of the Group 15 elements in the periodic table, the atoms of the Group 16 elements in the periodic table, and a silicon atom, although not particularly limited thereto.

In order to enhance the compatibility with silica, thereby obtaining a cross-linked rubber having good wear resistance, the modifying group for forming the terminal modifying group is more preferably a modifying group containing an atom selected from the group consisting of a nitrogen atom, an oxygen atom, phosphorus atom, sulfur atom, and a silicon atom. Among others, a modifying group containing an atom selected from the group consisting of a nitrogen atom, an oxygen atom, and a silicon atom is further more preferable.

Examples of modifying groups containing a nitrogen atom include amino, pyridyl, imino, amido, nitro, and urethane bond groups, and hydrocarbon groups containing any of these groups, and the like. Examples of modifying groups containing an oxygen atom include hydroxyl, carboxylic acid, ether, ester, carbonyl, aldehyde, and epoxy groups, and hydrocarbon groups containing any of these groups, and the like. Examples of modifying groups containing a silicon atom include alkylsilyl and oxysilyl groups, and hydrocarbon groups containing any of these groups, and the like. Examples of modifying groups containing a phosphorus atom include phosphoric acid and phosphino groups, and hydrocarbon groups containing any of these groups, and the like. Examples of modifying groups containing a sulfur atom include sulfonyl, thiol, and thioether groups, and hydrocarbon groups containing any of these groups, and the like. Alternatively, a modifying group containing two or more of the above groups may be used. Among these, the followings can be specifically mentioned as examples of particularly suitable modifying groups from the viewpoint of producing a cross-linked rubber having improved wear resistance: amino, pyridyl, imino, amido, hydroxyl, carboxylic acid, aldehyde, epoxy, and oxysilyl groups, and hydrocarbon groups containing any of these groups. From the viewpoint of the compatibility with silica, oxysilyl groups are particularly preferable. The "oxysilyl group" means a group containing a silicon-oxygen bond.

Specific examples of oxysilyl groups include alkoxysilyl, aryloxysilyl, acyloxy, alkylsiloxysilyl, arylsiloxysilyl groups, and the like. Further examples thereof include hydroxysilyl groups formed by hydrolyzing alkoxysilyl, aryloxysilyl, and acyloxyl groups. Among these, from the viewpoint of the compatibility with silica, alkoxysilyl groups are preferable.

The "alkoxysilyl group" means a group containing at least one alkoxy group linked to a silicon atom. Specific examples thereof include trimethoxysilyl, (dimethoxy) (methyl)silyl, (methoxy)(dimethyl)silyl, (methoxy)(dichloro)silyl, triethoxysiliyl, (diethoxy) (methyl)silyl, (ethoxy) (dimethyl)silyl, (dimethoxy)(ethoxy)silyl, (methoxy)(diethoxy)silyl, tripropoxysilyl groups, and the like.

The "aryloxysilyl group" means a group containing at least one aryloxy group linked to a silicon atom. Specific examples thereof include triphenoxysilyl, (diphenoxy)(methyl)silyl, (phenoxy)(dimethyl)silyl, (diphenoxy)(ethoxy)silyl, (phenoxy)(diethoxy)silyl groups, and the like. Among these, since (diphenoxy)(ethoxy)silyl and (phenoxy)(diethoxy)silyl groups have alkoxyl groups as well as aryloxy groups, they are also classified in alkoxysilyl groups.

The "acyloxysilyl group" means a group containing at least one acyloxy group linked to a silicon atom. Specific examples thereof include triacyloxysilyl, (diacyloxy) (methyl)silyl, and (acyloxy)(dimethyl)silyl groups, and the like.

The "alkylsiloxysilyl group" means a group containing at least one alkylsiloxy group linked to a silicon atom. Specific examples thereof include tris(trimethylsiloxy)silyl, trimethylsiloxy(dimethyl)silyl, triethylsiloxy(diethyl)silyl, and tris(dimethylsiloxy)silyl groups, and the like.

The "arylsiloxysilyl group" means a group containing at least one arylsiloxy group linked to a silicon atom. Specific examples thereof include tris(triphenylsiloxy)silyl, triphenylsiloxy(dimethyl)silyl, and tris(diphenylsiloxy)silyl

groups, and the like.

The "hydroxysilyl group" means a group containing at least one hydroxy group linked to a silicon atom. Specific examples thereof include trihydroxysilyl, (dihydroxy) (methyl)silyl, (hydroxy)(dimethyl)silyl, (dihydroxy)(ethoxy)silyl, and (hydroxy)(diethoxy)silyl groups, and the like. Among these, since (dihydroxy)(ethoxy)silyl and (hydroxy)(diethoxy)silyl groups have an alkoxyl group as well as a hydroxy group, they are also classified in alkoxysilyl groups.

The degree of introduction of modifying groups at the ends of the polymer chain of the ring-opened copolymer according to the present invention, which is expressed as a value in percentage of the number of the ends of ring-opened copolymer chains having modifying groups introduced/the total number of the ends of the ring-opened copolymer chains, is preferably 10% or more, more preferably 20% or more, further more preferably 30% or more, particularly preferably 40% or more, although not particularly limited thereto. A higher degree of introduction of the terminal modifying group is preferable because it corresponds to enhanced compatibility with silica, thus leading to production of a cross-linked rubber having better wear resistance. Any method for determining the degree of introduction of modifying groups to the ends of the polymer chain can be used without particular limitation. As one example thereof in the case in which oxysilyl groups are introduced as the terminal modifying group, the degree can be determined from a ratio of a peak area corresponding to oxysilyl groups measured by $^1$H-NMR spectrometry and the number average molecular weight determined by gel permeation chromatography.

The Mooney viscosity (ML1+4, 100°C) of the ring-opened copolymer according to the present invention is preferably in the range from 20 to 150, more preferably from 22 to 120, further more preferably from 25 to 90. Controlling the Mooney viscosity within the aforementioned ranges can result in an easy kneading at normal temperature and high temperatures, thereby leading to better processability.

<Method for producing ring-opened copolymer>

The ring-opened copolymer according to the present invention can be produced by any method without particular limitation. Examples thereof include methods for copolymerizing the norbornene compound represented by general formula (1), the monocyclic olefin, and the monomer capable of forming the branched structure in the presence of a ring-opening polymerization catalyst, and the like. Among these, a preferred method is ring-opening metathesis polymerization of the norbornene compound represented by general formula (1), the monocyclic olefin, and the monomer capable of forming the branched structure.

In the polymerization, a monomer mixture containing the norbornene compound represented by general formula (1), the monocyclic olefin, and the monomer capable of forming the branched structure is used which contains each monomer in an amount corresponding to the content described above. In order to effectively suppress gelling of the resulting ring-opened copolymer, the content of the monomer capable of forming the branched structure in the monomer mixture is preferably 0.01 to 0.045 mol%.

The ring-opening polymerization catalyst may be any catalyst that can catalyze ring-opening copolymerization of the norbornene compound represented by general formula (1), the monocyclic olefin, and the monomer capable of forming the branched structure. Among others, preferred is a ruthenium-carbene complex.

Specific examples of ruthenium carbene complexes include bis(tricyclohexylphosphine)benzylideneruthenium dichloride, bis(triphenylphosphine)-3,3-diphenylpropenylideneruthenium dichloride, bis(tricyclohexylphosphine)t-butylvinylideneruthenium dichloride, dichloro-(3-phenyl-1H-inden-1-ylidene)bis(tricyclohexylphosphine)ruthenium, bis(1,3-diisopropylimidazolin-2-ylidene) benzylideneruthenium dichloride, bis(1,3-dicyclohexylimidazolin-2-ylidene)benzylideneruthenium dichloride, (1,3-dimesitylimidazolin-2-ylidene) (tricyclohexylphosphine)benzylideneruthenium dichloride, (1,3-dimesitylimidazolidin-2-ylidene)(tricyclohexylphosphine) benzylideneruthenium dichloride, bis(tricyclohexylphosphine)ethoxymethylideneruthenium dichloride, (1,3-dimesitylimidazolidin-2-ylidene) (tricyclohexylphosphine)ethoxymethylideneruthenium dichloride, and the like. One of the ring-opening polymerization catalysts may be used alone, or two or more of them may be used in mix.

The amount of the ring-opening polymerization catalyst to be used is typically within the range of 1:500 to 1:2,000,000, preferably within the range of 1:700 to 1:1,500,000, more preferably within the range of 1:1,000 to 1:1,000,000 when expressed as a molar ratio "ring-opening polymerization catalyst:monomers to be copolymerized".

The polymerization reaction may be performed in the absence of a solvent or in a solution. In the case where the copolymerization is performed in a solution, the solvent to be used may be any solvent that is inert in the polymerization reaction, and can dissolve the substances to be used in the copolymerization, such as the norbornene compound represented by general formula (1), the monocyclic olefin, and the polymerization catalyst without particular limitation. Preferably used are hydrocarbon-based solvents or halogen-based solvents. Examples of the hydrocarbon-based solvents include aromatic hydrocarbons such as benzene, toluene, xylene, and ethylbenzene; aliphatic hydrocarbons such as hexane, n-heptane, and n-octane; alicyclic hydrocarbons such as cyclohexane, cyclopentane, and methylcyclohexane; and the like. Examples of the halogen-based solvents include haloalkanes such as dichloromethane and chloroform; aromatic halogens such as chlorobenzene and dichlorobenzene; and the like. One of these catalysts may be used alone,

or two or more of them may be used in mix.

In the ring-opening copolymerization of the norbornene compound represented by general formula (1), the monocyclic olefin, and the monomer capable of forming the branched structure, in order to adjust the molecular weight of the resulting ring-opened copolymer, an olefin compound or a diolefin compound may be added to the polymerization reaction system as a molecular weight adjuster, as required.

The olefin compound may be any organic compound having an ethylenically unsaturated bond without particular limitation. Examples thereof include $\alpha$-olefins such as 1-butene, 1-pentene, 1-hexene, and 1-octene; styrene compounds such as styrene and vinyltoluene; halogen-containing vinyl compounds such as allyl chloride; vinyl ethers such as ethyl vinyl ether and i-butyl vinyl ether; silicon-containing vinyl compounds such as allyltrimethoxysilane, allyltriethoxysilane, allyltrichlorosilane, and styryltrimethoxysilane; disubstituted olefins such as 2-butene and 3-hexene; and the like.

Examples of diolefin compounds include non-conjugated diolefins such as 1,4-pentadiene, 1,4-hexadiene, 1,5-hexadiene, 1,6-heptadiene, 2-methyl-1,4-pentadiene, and 2,5-dimethyl-1,5-hexadiene; and the like.

Although the amount of the olefin compound or the diolefin compound to be used as the molecular weight adjuster can be appropriately selected according to the molecular weight of the ring-opened copolymer to be produced, the amount is typically within the range of 1/100 to 1/100,000, preferably within the range of 1/200 to 1/50,000, more preferably within the range of 1/500 to 1/10,000 when expressed as a molar ratio with respect to the monomers to be copolymerized.

In the case where the ring-opened copolymer according to the present invention has a modifying group at the end(s) of the polymer chain, a modifying group-containing olefinically unsaturated hydrocarbon compound is preferably used as the molecular weight adjuster instead of the above-described olefin compound and diolefin compound. By using such a modifying group-containing olefinically unsaturated hydrocarbon compound, the modifying group can be suitably introduced to the end(s) of the polymer chain of the ring-opened copolymer obtained by copolymerization.

The modifying group-containing olefinic unsaturated hydrocarbon compound can be any compound that has a modifying group and an olefinic carbon-carbon double bond having metathesis reactivity without particular limitation. For example, in the case where introduction of an oxysilyl group to the end(s) of the polymer chain of the ring-opened copolymer is desired, an oxysilyl group-containing olefinically unsaturated hydrocarbon can be in the polymerization reaction system.

Among such oxysilyl group-containing olefinically unsaturated hydrocarbons, examples of oxysilyl group-containing olefinically unsaturated hydrocarbons to introduce the modifying group at only one end of the polymer chain of the ring-opened copolymer include alkoxysilane compounds such as vinyl(trimethoxy)silane, vinyl(triethoxy)silane, allyl(trimethoxy)silane, allyl(methoxy)(dimethyl)silane, allyl(triethoxy)silane, allyl(ethoxy) (dimethyl)silane, styryl(trimethoxy)silane, styryl(triethoxy)silane, styrylethyl(triethoxy)silane, allyl(triethoxysilylmethyl)ether, and allyl(triethoxysilylmethyl) (ethyl)amine; allyloxysilane compounds such as vinyl(triphenoxy)silane, allyl(triphenoxy)silane, and allyl(phenoxy)(dimethyl)silane; acyloxysilane compounds such as vinyl(triacetoxy)silane, allyl(triacetoxy)silane, allyl(diacetoxy)methylsilane, and allyl(acetoxy)(dimethyl)silane; alkylsiloxysilane compounds such as allyltris(trimethylsiloxy)silane arylsiloxysilane compounds such as allyltris(triphenylsiloxy)silane; polysiloxane compounds such as 1-allylheptamethyltrisiloxane, 1-allylnonamethyltetrasiloxane, 1-allylnonamethylcyclopentasiloxane, and 1-allylundecamethylcyclohexasiloxane; and the like.

Examples of oxysilyl group-containing olefinically unsaturated hydrocarbons to introduce the modifying group at both ends of the polymer chain of the ring-opened copolymer include alkoxysilane compounds such as bis(trimethoxysilyl)ethylene, bis(triethoxysilyl)ethylene, 2-butene-1,4-di(trimethoxysilane), 2-butene-1,4-di(triethoxysilane), and 1,4-di(trimethoxysilylmethoxy)-2-butene; aryloxysilane compounds such as 2-butene-1,4-di(triphenoxysilane); acyloxysilane compounds such as 2-butene-1,4-di(triacetoxysilane); alkylsyloxysilane compounds such as 2-butene-1,4-di[tris(trimethylsiloxy)silane]; aryl syloxysilane compounds such as 2-butene-1,4-di[tris(triphenylsiloxy)silane)]; polysiloxane compounds such as 2-butene-1,4-di(heptamethyltrisiloxane) and 2-butene-1,4-di(undecamethylcyclohexasiloxane); and the like.

The modifying group-containing olefinically unsaturated hydrocarbon compound such as the oxysilyl group-containing olefinically unsaturated hydrocarbon compound acts as a molecular weight adjuster as well as acts to introduce the modifying group to the end(s) of the polymer chain of the ring-opened copolymer. Accordingly, the amount of the modifying group-containing olefinically unsaturated hydrocarbon compound to be used can be appropriately selected according to the molecular weight of the ring-opened copolymer to be produced. The amount is typically within the range of 1/100 to 1/100,000, preferably within the range of 1/200 to 1/50,000, more preferably within the range of 1/500 to 1/10,000 when expressed as a molar ratio with respect to the monomers to be copolymerized.

The polymerization reaction temperature is preferably -100°C or higher, more preferably -50°C or higher, further more preferably 0°C or higher, particularly preferably 15°C or higher, although not particularly limited thereto. The upper limit of the polymerization reaction temperature is preferably lower than 120°C, more preferably lower than 100°C, further more preferably lower than 90°C, particularly preferably lower than 80°C, although not particularly limited thereto. The polymerization reaction time is preferably 1 minute to 72 hours, more preferably 10 hours to 20 hours, although not also

particularly limited thereto.

To the ring-opened copolymer obtained by the polymerization reaction may be optionally added an antioxidant such as a phenol-based stabilizer, a phosphorus-based stabilizer, or a sulfur-based stabilizer. The amount of the antioxidant to be added can be appropriately determined according to factors such as the type thereof. Additionally, an extender oil may also be added if needed. In the case where the ring-opened copolymer is obtained as a polymerization solution, in order to collect the ring-opened copolymer from the polymerization solution, a known method can be used. Examples thereof include a method of separating a solvent by steam stripping and the like, separating a solid by filtration, and then drying the solid to obtain a solid ring-opened copolymer, and the like.

<Rubber composition>

The rubber composition according to the present may contain, in addition to the ring-opened copolymer according to the present invention described above, necessary amounts of compounding agents such as a cross-linker, a cross-linking accelerator, a cross-linking activator, a filler other than silica, an antioxidant, an activator, a process oil, a plasticizer, and a lubricant in a conventional manner.

Examples of cross-linkers include sulfur such as powdered sulfur, precipitated sulfur, colloidal sulfur, insoluble sulfur, and highly dispersible sulfur; halogenated sulfur such as sulfur monochloride and sulfur dichloride; organic peroxides such as dicumyl peroxide and di-tert-butyl peroxide; quinone dioximes such as p-quinone dioxime and p,p'-dibenzoylquinone dioxime; organic polyvalent amine compounds such as triethylenetetramine, hexamethylenediaminecarbamate, and 4,4'-methylenebis-o-chloroaniline; alkylphenol resins having a methylol group; and the like. Among these, sulfur is preferable, and powdered sulfur is more preferable. One of these cross-linkers may be used alone, or two or more of them may be used in combination. The amount of the cross-linker to be added is preferably 0.1 to 15 parts by weight, more preferably 0.5 to 5 parts by weight with respect to 100 parts by weight of the rubber ingredient in the rubber composition.

Examples of cross-linking accelerators include sulfenamide-based cross-linking accelerators such as N-cyclohexyl-2-benzothiazolylsulfenamide, N-t-butyl-2-benzothiazolylsulfenamide, N-oxyethylene-2-benzothiazolylsulfenamide, N-oxyethylene-2-benzothiazolylsulfenamide, and N,N'-diisopropyl-2-benzothiazolylsulfenamide; guanidine-based cross-linking accelerators such as 1,3-diphenylguanidine, 1,3-di-ortho-tolylguanidine, and 1-ortho-tolylbiguanidine; thiourea-based cross-linking accelerators such as diethylthiourea; thiazole-based cross-linking accelerators such as 2-mercaptobenzothiazole, di-2-benzothiazyl disulfide, and 2-mercaptobenzothiazole zinc salt; thiuram-based cross-linking accelerators such as tetramethylthiuram monosulfide and tetramethylthiuram disulfide; dithiocarbamic acid-based cross-linking accelerators such as sodium dimethyldithiocarbamate and zinc diethyldithiocarbamate; xanthogenic acid-based cross-linking accelerators such as sodium isopropylxanthate, zinc isopropylxanthate and zinc butylxanthate; and the like. Among these, those containing a guanidine-based cross-linking accelerator and/or a thiazole-based cross-linking accelerator are preferable, and those containing a guanidine-based cross-linking accelerator and a thiazole-based cross-linking accelerator are particularly preferable. One of these cross-linking accelerators may be used alone, or two or more of them may be used in combination. The amount of the cross-linking accelerator to be added is preferably 0.1 to 15 parts by weight, more preferably 0.5 to 5 parts by weight with respect to 100 parts by weight of the rubber ingredient in the rubber composition.

As the cross-linking activator, a higher fatty acid such as stearic acid, zinc oxide, or the like can be used. The amount of the cross-linking activator to be added is appropriately selected. For a higher fatty acid, the amount of addition thereof is preferably 0.05 to 15 parts by weight, more preferably 0.5 to 5 parts by weight with respect to 100 parts by weight of the rubber ingredient in the rubber composition, and for zinc oxide, the amount of addition thereof is preferably 0.05 to 10 parts by weight, more preferably 0.5 to 3 parts by weight with respect to 100 parts by weight of the rubber ingredient in the rubber composition.

As the process oil, a mineral oil or a synthetic oil may be used. As the mineral oil, an aroma oil, a naphthenic oil, a paraffin oil, or the like is typically used. Examples of other compounding agents include activators such as diethylene glycol, polyethylene glycol, and silicone oil; fillers other than silica such as carbon black, calcium carbonate, talc, and clay; tackifiers such as petroleum resin and coumarone resin; wax, and the like.

The rubber composition according to the present invention can contain silica. Examples of the silica include dry white carbon, wet white carbon, colloidal silica, precipitated silica, and the like, although not particularly limited thereto. Alternatively, a carbon-silica dual phase filler in which silica is supported on the carbon black surface may be used. Among these, wet white carbon mainly containing hydrous silicic acid is preferable. These may be used alone or in combination of two or more.

The silica has a nitrogen adsorption specific surface area preferably of 50 to 300 $m^2/g$, more preferably of 80 to 220 $m^2/g$, particularly preferably of 100 to 170 $m^2/g$. Controlling the specific surface area within these ranges results in particularly good compatibility between the ring-opened copolymer and the silica. The pH of the silica is preferably less than 7, and more preferably 5 to 6.9. The nitrogen adsorption specific surface area can be measured in accordance

with ASTMD3037-81 using the BET method.

The amount of the silica to be added in the rubber composition according to the present invention is preferably 1 to 150 parts by weight, more preferably 10 to 120 parts by weight, further more preferably 15 to 100 parts by weight, particularly preferably 20 to 80 parts by weight with respect to 100 parts by weight of the rubber ingredient containing the ring-opened copolymer according to the present invention described above in the rubber composition. Controlling the amount of the silica to be added within the above ranges can result in a cross-linked rubber having appropriately enhanced wear resistance.

The rubber composition according to the present invention preferably further contains a silane coupling agent in order to improve the compatibility between the ring-opened copolymer and the silica. Examples of silane coupling agents include vinyltriethoxysilane, β- (3,4-epoxycyclohexyl)ethyltrimethoxysilane, N-(β-aminoethyl)-γ-aminopropyltrimethoxysilane, bis(3-(triethoxysilyl)propyl)tetrasulfide, bis(3-(triethoxysilyl)propyl)disulfide, and the like. Further examples include tetrasulfides described in Japanese Unexamined Patent Application Publication No. JP H6-248116, such as γ-trimethoxysilylpropyldimethylthiocarbamyltetrasulfide and γ-trimethoxysilylpropylbenzothiadyltetrasulfide. Among these, tetrasulfides are preferable. These silane coupling agents may be used alone or in combination of two or more. The amount of the silane coupling agent to be added is preferably 0.1 to 30 parts by weight, more preferably 1 to 15 parts by weight with respect to 100 parts by weight of the silica.

The rubber composition according to the present invention may further contain a rubber other than the ring-opened copolymer according to the present invention described above as a rubber ingredient. Examples of the rubber other than the ring-opened copolymer according to the present invention include natural rubber (NR), polyisoprene rubber (IR), emulsion-polymerized styrene-butadiene copolymerization rubber (SBR), solution-polymerized random SBR (bound styrene: 5 to 50 wt%, 1,2-bond content in butadiene units: 10 to 80%), high trans SBR (trans bond content in butadiene units: 70 to 95%), low cis polybutadiene rubber (BR), high cis BR, high trans BR (trans bond content in butadiene units: 70 to 95%), styrene-isoprene copolymer rubber, butadiene-isoprene copolymer rubber, emulsion-polymerized styrene-acrylonitrile-butadiene copolymer rubber, acrylonitrile-butadiene copolymer rubber, high vinyl SBR-low vinyl SBR block copolymer rubber, polyisoprene-SBR block copolymer rubber, polystyrene-polybutadiene-polystyrene block copolymer, acrylic rubber, epichlorohydrin rubber, fluororubber, silicone rubber, ethylene-propylene rubber, and urethane rubber; and the like. Among these, NR, BR, IR, and SBR are preferably used. One of these rubbers can be used alone, or two or more of them can be used in combination.

The content of the ring-opened copolymer in the rubber composition according to the present invention is preferably 5 wt% or more, more preferably 10 wt% or more, particularly preferably 20 wt% or more of the total amount of the rubber ingredient. Too small a content may not provide the wear resistance-improving effect.

The rubber composition according to the present invention can be obtained by kneading ingredients in a conventional manner. For example, the rubber composition can be obtained by kneading compounding agents other than the cross-linker and the cross-linking accelerator with the rubber ingredient such as the ring-opened copolymer, and then combining the kneaded product with the cross-linker and the cross-linking accelerator. The temperature during kneading of the compounding agents other than the cross-linker and the cross-linking accelerator with the rubber ingredient such as the ring-opened copolymer is preferably 80 to 200°C, more preferably 120 to 180°C, and the kneading time is preferably 30 seconds to 30 minutes. The cross-linker and the cross-linking accelerator are combined after cooling to a temperature of typically 100°C or lower, preferably 80°C or lower.

<Cross-linked rubber>

The cross-linked rubber according to the present invention is obtained by cross-linking the rubber composition according to the present invention described above.

The cross-linked rubber according to the present invention can be produced using the rubber composition according to the present invention by molding the composition using a molding machine enabling molding into a desired shape, such as extruders, injection molding machines, compressors, rolls and the like, and heating the molded product for a cross-linking reaction to fix the shape as a cross-linked product. In this case, the cross-linking may be performed after molding, or may be performed simultaneously with molding. The molding temperature is typically 10 to 200°C, preferably 25 to 120°C. The cross-linking temperature is typically 100 to 200°C, preferably 130 to 190°C, and the cross-linking time is typically 1 minute to 24 hours, preferably 2 minutes to 12 hours, particularly preferably 3 minutes to 6 hours.

Depending on the shape, the size, and the like thereof, the inside of the cross-linked rubber may not be sufficiently cross-linked even when the surface thereof is cross-linked. For this reason, the cross-linked rubber may be further heated for secondary cross-linking.

As a heating method, a common method used to cross-link rubber such as press heating, steam heating, oven heating, or hot air heating can be appropriately selected.

The cross-linked rubber according to the present invention thus obtained has excellent wear resistance. Utilizing such properties, a molded product according to the present invention formed from the cross-linked rubber according to

the present invention can be used in various applications, for example, materials for parts of a tire, such as cap treads, base treads, carcasses, sidewalls, and bead parts; hoses, belts, mats, anti-vibration rubber, and other materials for various industrial products; rebound resilience improvers for resins; resin film buffers; shoe soles; rubber shoes; golf balls; toys; and the like. The molded product formed from the cross-linked rubber according to the present invention can be suitably used in tire parts, such as treads, carcasses, sidewalls, and bead parts in various tires such as all-season tires, high-performance tires, studless tires, and the like.

EXAMPLES

The present invention is hereinafter illustrated in greater detail with reference to Examples. However, the present invention should not be construed as limited to these examples. In the following examples, all "part(s)" are on a weight basis unless otherwise indicated. The test methods performed in Examples and Comparative Examples are as follows.

[Weight average molecular weight of ring-opened copolymer]

By gel permeation chromatography (GPC), a chart based on molecular weight calibrated with polystyrene standards was obtained. The weight average molecular weight (Mw) of the ring-opened copolymer was determined based on the chart. Specific measurement requirements for gel permeation chromatography were as follows.

Measuring instrument: HLC-8320 EcoSCE (available from TOSOH CORPORATION)
Column: two GMH-HR-H columns (available from TOSOH CORPORATION) connected in series
Detector: differential refractometer RI-8020 (available from TOSOH CORPORATION)
Eluent: tetrahydrofuran
Column temperature: 40°C

[Contents of structural units derived from 2-norbornene and structural units derived from 5-vinyl-2-norbornene in ring-opened copolymer]

The compositional ratio of monomer structures of the ring-opened copolymer was determined by measuring using $^1$H-NMR spectrometry.

[Degree of mutual adhesion of crumbs]

Each ring-opened copolymer as a sample was charged into a mixer filled with hot water. The ring-opened copolymer as a sample was cut into small pieces by a mixer to form crumbs. Subsequently, the resulting ring-opened copolymer in the form of crumbs and water were charged into a container equipped with a stirrer, and stirred for 4 hours at 60°C, at a rotation speed of 40 rpm. Subsequently, the ring-opened copolymer in the form of crumbs was sifted through a metallic mesh having 20 mm mesh openings, and the degree of mutual adhesion of crumbs was determined by a formula below. A lower degree of mutual adhesion of crumbs corresponds to less occurrence of the mutual adhesion of crumbs of the ring-opened copolymer, indicating better hot flowability.

Degree of mutual adhesion of crumbs (%) = (weight (g) of crumbs of ring-opened copolymer left on metal mesh/ total weight (g) of crumbs of ring-opened copolymer) × 100

[Wear resistance]

Each rubber composition was press-crosslinked for 20 minutes at 160°C, thereby producing a test piece. The wear resistance of the resulting test piece was measured using DIN Abrasion Tester (available from Ueshima Seisakusho Co., Ltd.) in accordance with JIS K6264 with a load of 10 N at 23°C. The measurement result is shown in an index in which Comparative Example 1 is taken as 100. A greater numerical value corresponds to better wear resistance.

<<Example 1>>

Under a nitrogen atmosphere, 500 g of cyclohexane, 1.49 mol of cyclopentene as a monocyclic olefin, 0.600

mol of 2-norbornene as a norbornene compound, 1.25 mmol of 1-hexene, and 0.428 mmol of 5-vinyl-2-norbornene as a monomer capable of forming a branched structural unit were placed in a glass reaction vessel equipped with a stirrer. The content of 5-vinyl-2-norbornene in the monomer mixture was 0.020 mol%. Subsequently, 0.0209 mmol of dichloro-(3-phenyl-1H-inden-1-ylidene)bis(tricyclohexylphosphine)ruthenium(II) dissolved in 5 mL of toluene was added thereto to cause polymerization to proceed for 2 hours at room temperature. After the polymerization reaction, an excess amount of vinyl ethyl ether was added to terminate the polymerization reaction.

The polymerization solution obtained by the polymerization reaction was poured into a largely excess amount of methanol containing 2,6-di-t-butyl-p-cresol (BHT). A precipitated polymer was collected and washed with methanol, and then dried under vacuum at 50°C for 24 hours, yielding ring-opened copolymer (1). Ring-opened copolymer (1) was measured to determine the weight average molecular weight (Mw), the content of a structural unit derived from 2-norbornene, the content of a structural units derived from 5-vinyl-2-norbornene, and the degree of mutual adhesion of crumbs according to the aforementioned methods. The results are shown in Table 1. Even though ring-opened copolymer (1) obtained was dissolved in tetrahydrofuran, any insoluble component (gel) did not generate. Similarly to ring-opened copolymer (1) obtained in Example 1, even though ring-opened copolymers obtained in Examples 2 to 6 and Comparative Examples 1, 2, and 4 described below were dissolved in tetrahydrofuran, any gel did not generate.

50 parts of ring-opened copolymer (1) obtained above and 50 parts of natural rubber were masticated by a Banbury mixer having a volume of 250 ml. To the masticated product of ring-opened polymer (1) and the natural rubber, 60 parts of silica (product name "Zeosil 1165MP", available from Rhodia Company, nitrogen adsorption specific surface area (the BET method) : 163 $m^2/g$), 10 parts of a process oil (product name "Aromax T-DAE", available from JX Nippon Oil & Energy Corporation), and 4.8 parts of a silane coupling agent (bis(3-(triethoxysilyl)propyl)tetrasulfide), product name "Si 69", available from Degussa Company) were added and then kneaded at a starting temperature of 110°C for 1.5 minutes. To the kneaded product, 3.0 parts of zinc oxide (zinc flower No. 1), 1.0 part of stearic acid (product name "SA-300", available from ADEKA Company), and 2.0 parts of an antioxidant (N-phenyl-N'-(1,3-dimethylbutyl)-p-phenylenediamine, product name "Nocrac 6C", available from OUCHI SHINKO CHEMICAL INDUSTRIAL CO., LTD) were added and then kneaded for 2.5 minutes. The resulting rubber composition was discharged from the Banbury mixer. The temperature of the rubber composition at the completion of the kneading was 150°C. The rubber composition was cooled to room temperature, kneaded again in the Banbury mixer for 3 minutes, and then was discharged from the Banbury mixer. Subsequently, the rubber composition obtained was kneaded with 1.1 parts of sulfur, 1.4 parts of a cross-linking accelerator (di-2-benzothiazolyl disulfide (available from OUCHI SHINKO CHEMICAL INDUSTRIAL CO., LTD., product name "Nocceler DM")), and 1.4 parts of a cross-linking accelerator (1,3-di-o-tolylguanidine (available from OUCHI SHINKO CHEMICAL INDUSTRIAL CO., LTD., product name "Nocceler DT")) in an open roll at 50°C, thereby providing a sheet-shaped rubber composition. The wear resistance of the obtained rubber composition was measured according to the method described above. The results are shown in Table 1.

<<Example 2>>

Ring-opened copolymer (2) was obtained by the same procedure as in Example 1 except that the amount of 1-hexene used was changed from 1.25 mmol to 1.99 mmol, and then was evaluated in the same manner as above. The results are shown in Table 1.

A rubber composition was obtained by the same procedure as in Example 1 except that ring-opened copolymer (2) obtained above was used, and then was evaluated in the same manner as above. The results are shown in Table 1.

<<Example 3>>

Ring-opened copolymer (3) was obtained by the same procedure as in Example 1 except that the amount of 5-vinyl-2-norbornene used was changed from 0.428 mmol to 0.266 mmol. The content of 5-vinyl-2-norbornene in the monomer mixture was 0.013 mol%. Ring-opened copolymer (3) obtained was evaluated in the same manner as in Example 1. The results are shown in Table 1.

A rubber composition was obtained by the same procedure as in Example 1 except that ring-opened copolymer (3) obtained above was used, and then was evaluated in the same manner as above. The results are shown in Table 1.

<<Example 4>>

Ring-opened copolymer (4) was obtained by the same procedure as in Example 1 except that the amount of 5-vinyl-2-norbornene used was changed from 0.428 mmol to 0.759 mmol. The content of 5-vinyl-2-norbornene in the monomer mixture was 0.036 mol%. Ring-opened copolymer (4) obtained was evaluated in the same manner as in Example 1. The results are shown in Table 1.

A rubber composition was obtained by the same procedure as in Example 1 except that ring-opened copolymer

(4) obtained above was used, and then was evaluated in the same manner as above. The results are shown in Table 1.

<<Example 5>>

Ring-opened copolymer (5) was obtained by the same procedure as in Example 1 except that the amount of cyclopentene used, the amount of 2-norbornene used, and the amount of 1-hexene used were changed to 2.54 mol, 0.271 mol, and 1.69 mmol, respectively. The content of 5-vinyl-2-norbornene in the monomer mixture was 0.015 mol%. The obtained ring-opened copolymer (5) was evaluated in the same manner as in Example 1. The results are shown in Table 1.

A rubber composition was obtained by the same procedure as in Example 1 except that ring-opened copolymer (5) obtained above was used, and then was evaluated in the same manner as above. The results are shown in Table 1.

<<Example 6>>

Ring-opened copolymer (6) was obtained by the same procedure as in Example 1 except that the amount of cyclopentene used, the amount of 2-norbornene used, and the amount of 1-hexene used were changed to 0.92 mol, 0.775 mol, and 1.02 mmol, respectively. The content of 5-vinyl-2-norbornene in the monomer mixture was 0.025 mol%. Ring-opened copolymer (6) obtained was evaluated in the same manner as in Example 1. The results are shown in Table 1.

A rubber composition was obtained by the same procedure as in Example 1 except that ring-opened copolymer (6) obtained above was used, and then was evaluated in the same manner as above. The results are shown in Table 1.

<<Comparative Example 1>>

Ring-opened copolymer (7) was obtained by the same procedure as in Example 1 except that 5-vinyl-2-norbornene was not used, and then was evaluated in the same manner as above. The results are shown in Table 1.

A rubber composition was obtained by the same procedure as in Example 1 except that ring-opened copolymer (7) obtained above was used, and then was evaluated in the same manner as above. The results are shown in Table 1.

<<Comparative Example 2>>

Ring-opened copolymer (8) was obtained by the same procedure as in Comparative Example 1 except that the amount of cyclopentene used, the amount of 2-norbornene used, and the amount of 1-hexene used were changed to 1.30 mol, 0.659 mol, and 1.17 mmol, respectively. Ring-opened copolymer (8) obtained was evaluated in the same manner as in Example 1. The results are shown in Table 1.

A rubber composition was obtained by the same procedure as in Example 1 except that ring-opened copolymer (8) obtained above was used, and then was evaluated in the same manner as above. The results are shown in Table 1.

<<Comparative Example 3>>

Ring-opened copolymer (9) was obtained by the same procedure as in Example 1 except that the amount of 5-vinyl-2-norbornene used was changed from 0.428 mmol to 1.042 mmol. The content of 5-vinyl-2-norbornene in the monomer mixture was 0.050 mol%. Ring-opened copolymer (9) obtained was evaluated in the same manner as in Example 1. The results are shown in Table 1.

Ring-opened copolymer (9) obtained was dissolved in tetrahydrofuran, and insoluble matter (gel component) was observed. Ring-opened copolymer (9) in the form of gel could not be cut into small pieces, and thus could not be formed into crumbs. In addition, ring-opened copolymer (9) in the form of gel could not be uniformly combined with other ingredients, and thus could not be formed into a rubber composition. Accordingly, regarding ring-opened copolymer (9), the degree of mutual adhesion of crumbs and the wear resistance of the resulting cross-linked rubber could not be measured.

<<Comparative Example 4>>

Ring-opened copolymer (10) was obtained by the same procedure as in Example 1 except that the amount of cyclopentene used, the amount of 1-hexene used, and the amount of 5-vinyl-2-norbornene used were changed to 3.41 mol, 2.05 mmol, and 0.693 mmol, respectively, and that 2-norbornene was not used. The content of 5-vinyl-2-norbornene in the monomer mixture was 0.020 mol%. Ring-opened copolymer (10) obtained was evaluated in the same manner as in Example 1. The results are shown in Table 1.

A rubber composition was obtained by the same procedure as in Example 1 except that ring-opened copolymer

(10) obtained above was used, and then was evaluated in the same manner as above. The results are shown in Table 1.

[Table 1]

TABLE 1

| | Ring-opened copolymer | | | | | Cross-linked rubber |
|---|---|---|---|---|---|---|
| | Weight average molecular weight (Mw) | Content of structural units derived from 2-norbornene (mol%) | Content of structural units derived from 5-vinyl-2-norbornene (mol%) | Gel generation | Degree of mutual adhesion of crumbs (%) | Wear Resistance |
| Example 1 | 284,000 | 48 | 0.034 | No | 0 | 111 |
| Example 2 | 199,000 | 41 | 0.036 | No | 0 | 117 |
| Example 3 | 232,000 | 43 | 0.021 | No | 0 | 108 |
| Example 4 | 320,000 | 45 | 0.061 | No | 0 | 116 |
| Example 5 | 305,000 | 20 | 0.035 | No | 0 | 115 |
| Example 6 | 275,000 | 66 | 0.030 | No | 0 | 106 |
| Comparative Example 1 | 224,000 | 45 | 0 | No | 98 | 100 |
| Comparative Example 2 | 303,000 | 54 | 0 | No | 95 | 99 |
| Comparative Example 3 | 545,000 | 45 | 0.083 | Yes | - | --- |
| Comparative Example 4 | 280,000 | 0 | 0.047 | No | 0 | 98 |

According to the results shown in Table 1, the ring-opened copolymers each containing a structural unit derived from a norbornene compound represented by general formula (I) shown above, a structural unit derived from a monocyclic olefin, and a branched structural unit, wherein the content of the branched structural unit is 0.005 to 0.08 mol% of the total repeating structural units of the ring-opened copolymer provided crumbs which did not mutually adhere, indicating their excellent hot flowability of the ring-opened copolymers. Additionally, their cross-linked rubbers had excellent wear resistance (Examples 1 to 6).

On the other hand, crumbs formed from the ring-opened copolymers containing no branched structural unit mutually adhered, indicating poor hot flowability of the ring-opened copolymers. In addition, the cross-linked rubbers obtained using these ring-opened copolymers had poor wear resistance (Comparative Examples 1 and 2).

The ring-opened copolymer having the content of the branched structural unit greater than 0.08 mol% of the total repeating structural units of the ring-opened copolymer was obtained as insoluble matter (gel component) in the polymerization solution. For this reason, the ring-opened copolymer could not be even formed into a rubber composition by uniformly combining with other ingredients (Comparative Example 3).

Furthermore, the cross-linked rubber obtained using the ring-opened copolymer containing no structural unit derived from the norbornene compound represented by general formula (I) had poor wear resistance (Comparative Example 4).

## Claims

**1.** A ring-opened copolymer, comprising:

a structural unit derived from a norbornene compound represented by general formula (I) below,
a structural unit derived from a monocyclic olefin, and
a branched structural unit,
wherein the content of the branched structural unit is 0.005 to 0.08 mol% in the total repeating structural units of the ring-opened copolymer:

[Chem 12]

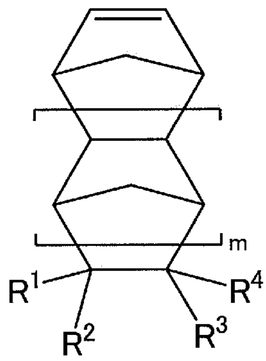

(I)

wherein $R^1$ to $R^4$ each independently represent a hydrogen atom, a $C_{1-20}$ linear saturated hydrocarbon group, or a substituent containing a halogen atom, a silicon atom, an oxygen atom or a nitrogen atom, and m is 0 or 1.

2. The ring-opened copolymer according to claim 1, wherein the content of the structural unit derived from a norbornene compound is 5 mol% or more in the total repeating structural units of the ring-opened copolymer.

3. The ring-opened copolymer according to claim 1 or 2, wherein in general formula (I), m is 0.

4. The ring-opened copolymer according to any one of claims 1 to 3, wherein in general formula (I), $R^1$ to $R^4$ are each independently a hydrogen atom or a $C_{1-3}$ alkyl group.

5. The ring-opened copolymer according to any one of claims 1 to 4, wherein the monocyclic olefin is at least one selected from the group consisting of cyclopentene, cyclohexene, cycloheptene, and cyclooctene.

6. The ring-opened copolymer according to any one of claims 1 to 5, wherein the branched structural unit is represented by any of formulae (II) to (V) :

[Chem 13]

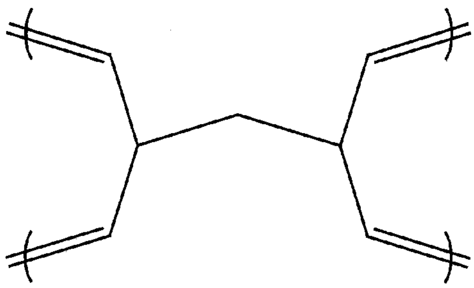

(II)

wherein a hydrogen atom may be substituted with a $C_{1-6}$ alkyl group;

[Chem 14]

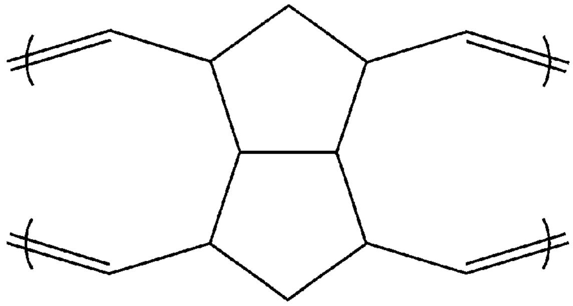

(III)

wherein a hydrogen atom may be substituted with a $C_{1-6}$ alkyl group;

[Chem 15]

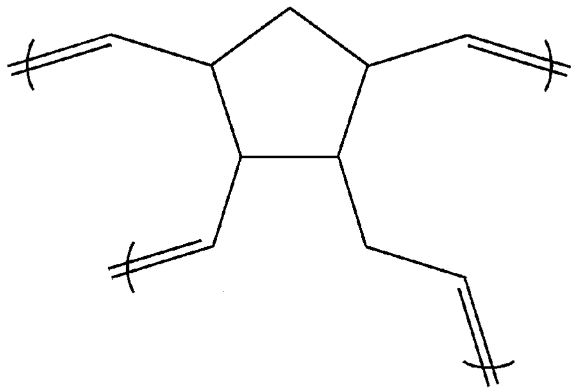

(IV)

wherein a hydrogen atom may be substituted with a $C_{1-6}$ alkyl group;

[Chem 16]

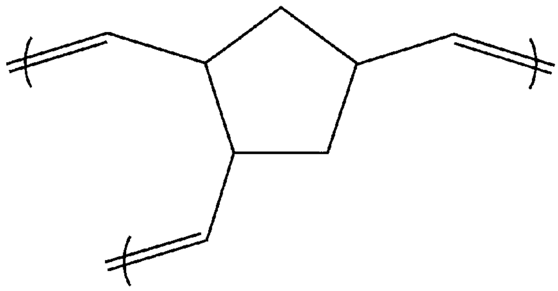

(V)

wherein a hydrogen atom may be substituted with a $C_{1-6}$ alkyl group.

**7.** The ring-opened copolymer according to any one of claims 1 to 6, wherein the ring-opened copolymer has a weight average molecular weight of 150,000 or more and 400,000 or less.

**8.** A rubber composition comprising the ring-opened copolymer according to any one of claims 1 to 7.

**9.** The rubber composition according to claim 8, further comprising a cross-linker.

**10.** A cross-linked rubber obtained by cross-linking the rubber composition according to claim 9.

**11.** A molded product obtained by molding the rubber composition according to claim 8 or the cross-linked rubber

according to claim 10.

**12.** A method for producing a ring-opened copolymer by ring-opening metathesis polymerization of a monomer mixture comprising a norbornene compound represented by general formula (I) below, a monocyclic olefin, and a monomer capable of forming a branched structure,
wherein the monomer capable of forming a branched structure is at least one selected from the group consisting of polycyclic diolefin compounds having at least two ring structures having one double bond, cyclic olefin compounds having a ring structure having one double bond and a vinyl group, and compounds having three or more vinyl groups:

[Chem 17]

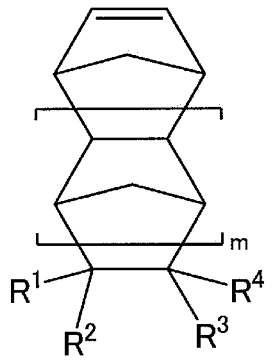

(I)

wherein $R^1$ to $R^4$ each independently represent a hydrogen atom, a $C_{1-20}$ linear saturated hydrocarbon group, or a substituent containing a halogen atom, a silicon atom, an oxygen atom or a nitrogen atom, and m is 0 or 1.

**13.** The method for producing the ring-opened copolymer according to claim 12, wherein the content of the monomer capable of forming a branched structure in the monomer mixture is 0.01 to 0.045 mol%.

**INTERNATIONAL SEARCH REPORT**

International application No. PCT/JP2020/046943

A. CLASSIFICATION OF SUBJECT MATTER
C08G 61/08(2006.01)i; C08L 21/00(2006.01)i; C08L 65/00(2006.01)i
FI: C08G61/08; C08L21/00; C08L65/00

According to International Patent Classification (IPC) or to both national classification and IPC

B. FIELDS SEARCHED

Minimum documentation searched (classification system followed by classification symbols)
C08G61/08; C08L21/00; C08L65/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| A | JP 2019-81840 A (ZEON CORP.) 30 May 2019 (2019-05-30) entire text | 1-13 |
| A | WO 2018/079602 A1 (ZEON CORP.) 03 May 2018 (2018-05-03) entire text | 1-13 |
| A | WO 2014/133028 A1 (ZEON CORP.) 04 September 2014 (2014-09-04) entire text | 1-13 |
| A | JP 2011-126966 A (ZEON CORP.) 30 June 2011 (2011-06-30) entire text | 1-13 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 February 2021 (03.02.2021) | 16 February 2021 (16.02.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/046943

| Patent Documents referred in the Report | Publication Date | Patent Family | Publication Date |
|---|---|---|---|
| JP 2019-81840 A | 30 May 2019 | (Family: none) | |
| WO 2018/079602 A1 | 03 May 2018 | US 2019/0256692 A1 entire text<br>EP 3533829 A1<br>CN 109844008 A | |
| WO 2014/133028 A1 | 04 Sep. 2014 | US 2016/0002382 A1 entire text<br>EP 2963074 A1<br>CN 105073823 A | |
| JP 2011-126966 A | 30 Jun. 2011 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2014133028 A
- JP 2011126966 A
- JP H6248116 B